(19) Europäisches Patentamt
European Patent Office
Office européen des brevets

(11) EP 2 560 785 B1

(12) **FASCICULE DE BREVET EUROPEEN**

(45) Date de publication et mention
de la délivrance du brevet:
**25.02.2015 Bulletin 2015/09**

(21) Numéro de dépôt: **10751822.7**

(22) Date de dépôt: **03.08.2010**

(51) Int Cl.:
**B23K 31/02** *(2006.01)* **B23K 31/12** *(2006.01)*
**B23K 9/025** *(2006.01)* **B23K 11/00** *(2006.01)*
**B23K 26/26** *(2014.01)* **B21B 15/00** *(2006.01)*
**B21C 51/00** *(2006.01)* **B21C 37/02** *(2006.01)*

(86) Numéro de dépôt international:
**PCT/EP2010/061319**

(87) Numéro de publication internationale:
**WO 2011/144262 (24.11.2011 Gazette 2011/47)**

(54) **PROCEDE ET DISPOSITIF DE CONTROLE D'UN CYCLE THERMIQUE D'UNE SOUDURE PAR RABOUTAGE D'EXTREMITES DE BANDES**

VERFAHREN UND VORRICHTUNG ZUR STEUERUNG DER TEMPERATUR-ZEIT-FOLGE EINER SCHWEISSSTELLE ZUR VERBIDUNG DER ENDEN EINES STREIFENS

METHOD AND DEVICE FOR CONTROLLING A THERMAL CYCLE OF A WELD JOINING ENDS OF STRIP TOGETHER

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **19.05.2010 EP 10290265**

(43) Date de publication de la demande:
**27.02.2013 Bulletin 2013/09**

(73) Titulaire: **Siemens VAI Metals Technologies SAS 42403 Saint-Chamond (FR)**

(72) Inventeur: **MICHAUT, Marc 42152 L'Horme (FR)**

(74) Mandataire: **Maier, Daniel Oliver et al Siemens AG Postfach 22 16 34 80506 München (DE)**

(56) Documents cités:
**WO-A1-02/24392      JP-A- 3 207 584
JP-A- 5 115 903      JP-A- 6 106 362
US-A- 4 596 917**

## Description

La présente invention concerne un procédé et un dispositif de contrôle d'un cycle thermique d'une soudure de raboutage d'extrémités de bandes d'acier en défilement dans une installation de laminage ou de traitement, selon le préambule des revendications 1 et 8 (voir, par example, JP 5/115903 A).

L'invention se rapporte notamment aux soudures de raboutage de bandes d'acier défilant en continu dans une installation de laminage à froid ou de traitement tel que le décapage de surface, le recuit continu, le revêtement électrolytique ou au trempé, et notamment aux soudures d'une extrémité de bande avec une autre extrémité d'une autre bande, réalisées de proche en proche par déplacement d'un dispositif de soudage le long d'une ligne de soudage. Dans la suite de ce document, l'expression "installation de traitement" sera utilisée pour faire référence aux installations de laminage ou aux installations de traitement susmentionnées.

Afin d'améliorer la productivité des installations de traitement des bandes d'acier en évitant notamment la transformation desdites bandes bobine après bobine, les installations de traitement modernes de forte capacité sont capables de fonctionner en continu par raboutage successif des bandes les unes aux autres, une extrémité d'une première bande, par exemple une queue d'une bande en fin de traitement, étant raccordée à une autre extrémité d'une seconde bande, par exemple la tête d'une nouvelle bande fournie sous forme de bobine insérable en entrée de l'installation de traitement.

Durant cette opération de raboutage, le déplacement dans l'installation de traitement des deux extrémités de bandes à souder, i.e. la queue de la première bande et la tête de la seconde bande, est arrêté, et les sections aval de l'installation de traitement (i.e. les sections situées après ladite queue de la première bande dans le sens de défilement de la bande) sont alimentées par un dispositif d'accumulation de bande préalablement rempli durant l'intervalle de temps séparant deux raboutages successifs. Une telle opération de raboutage est bien connue de l'homme du métier dont les efforts vont porter sur la rapidité de l'opération de raboutage, afin de limiter le temps d'arrêt des extrémités de bande et, par voie de conséquence, la capacité et le coût des dispositifs d'accumulation.

Usuellement, l'opération de raboutage est réalisée par une machine de raboutage par soudage, aussi appelée soudeuse, qui comporte, en plus d'un dispositif de soudage proprement dit, deux paires de mors de serrage destinés à immobiliser les extrémités de bande durant leur jonction par soudage, respectivement une première paire de mors de serrage destinée à immobiliser la queue de la première bande susceptible d'être engagée dans une section de l'installation de traitement située en aval de ladite première paire de mors dans le sens de défilement de la bande, et une seconde paire de mors de serrage destinée à immobiliser la tête de la seconde bande susceptible d'avoir été introduite en amont de la machine de raboutage. Différents procédés de soudage susceptibles d'être mis en oeuvre par différents dispositifs de soudage sont connus de l'homme du métier. Il s'agit par exemple des procédés de soudage en bout par étincelage, par résistance à la molette, MIG, TIG, Laser, ou encore laser hybride.

La machine de raboutage par soudage doit être capable de produire une soudure de haute qualité. En effet, la rupture d'une soudure de mauvaise qualité au cours du défilement de la bande dans l'installation de traitement, ou même la nécessité de refaire une soudure jugée incorrecte ou de mauvaise qualité peuvent entraîner des pertes de production importantes et des coûts relativement élevés.

La qualité métallurgique de la soudure, en particulier pour les aciers susceptibles d'altérations métallurgiques de la zone affectée thermiquement par l'opération de soudage, dépend du procédé utilisé pour le soudage et du cycle thermique qu'il induit dans ladite zone affectée, ainsi que de divers traitements de pré- et post-chauffage ou de recuit pratiqués localement dans la soudeuse elle-même ou immédiatement en aval de cette dernière. De plus, la continuité et la compacité d'une soudure, qui définissent aussi la qualité de ladite soudure, dépendent essentiellement de paramètres de soudage utilisés. La valeur de ces paramètres de soudage est choisie afin de garantir une totale jonction par fusion des deux extrémités de bandes à souder, ceci sans surépaisseur excessive ou manque d'épaisseur. La continuité et la compacité de la soudure dépendent aussi d'une absence de défauts, par exemple de type fissures, associés aux transformations métallurgiques.

Le considérable élargissement des gammes de nuances et d'épaisseurs d'aciers traités dans les installations de traitement, en particulier pour faire face aux demandes des constructeurs automobiles, conduit de plus en plus à souder des nuances d'aciers à hautes caractéristiques susceptibles de transformations métallurgiques entrainant de forts durcissements et, corrélativement, entrainant une fragilité de la soudure susceptible de causer une rupture du joint soudé en cours de défilement dans l'installation de traitement.

Afin d'éviter cette fragilisation de la soudure, des procédés de traitements thermiques de la soudure ont été développés par l'homme du métier et sont mis en oeuvre par des dispositifs de traitement thermique aptes à chauffer les extrémités de bande ou ladite soudure, en particulier par induction électromagnétique. Il s'agit notamment du procédé de recuit après soudage dont le but est de restaurer métallurgiquement une ductilité acceptable, ou encore du procédé de préchauffage des extrémités de bandes à souder en vue de diminuer la vitesse de refroidissement de la soudure et donc de limiter son durcissement.

Le contrôle du traitement thermique de la soudure est réalisé manuellement par un opérateur à partir de tables de paramètres de soudage. Généralement, ces tables sont établies de manière empirique, en fonction de caractéristiques matérielles générales de grandes familles d'aciers, sans prise en compte précise de différences chimiques ou physiques pouvant exister au sein même de chaque famille d'aciers. Ce contrôle manuel du traitement thermique par un opérateur comprend de nombreux désavantages. Notamment, il existe une probabilité non nulle d'erreur d'un choix d'un paramètre de soudage à partir de ladite table. En effet, l'échantillonnage imprécis des différents aciers par lesdites tables oblige l'opérateur à choisir des paramètres de soudage qui ne correspondent pas exactement à l'acier de la bande à souder, mais à un acier ayant des caractéristiques chimiques ou physiques similaires à celles de l'acier de la bande. Ce choix n'est pas toujours adéquat et peut conduire à des soudures de mauvaises qualités. D'autre part, ces tables ne permettent pas de déterminer de manière sûre et précise un traitement thermique en adéquation avec le procédé de soudage et les caractéristiques physiques et/ou chimiques de la bande, en particulier dans le domaine du préchauffage des soudures réalisées par des procédés de soudage procédant de proche en proche, tel le MIG, TIG, laser, laser hybride, ou "mash-lap".

Ainsi, un mauvais paramètre de soudage est susceptible d'être choisi dès que les caractéristiques matérielles (physiques et/ou chimiques) de la bande ne correspondent plus exactement aux caractéristiques matérielles générales d'une famille d'aciers desdites tables, le choix dudit paramètre de soudage risquant dès lors de conduire à une soudure de mauvaise qualité. La difficulté d'une détermination de la valeur optimale des paramètres de soudage, notamment relatifs à des conditions de préchauffage des soudures, incite les utilisateurs de machines de raboutage comprenant un dispositif de traitement thermique à ne pas utiliser un procédé de traitement thermique par préchauffage, au bénéfice d'un recuit post soudage. Alors que le préchauffage permettrait de maîtriser la structure métallurgique de la soudure, le recuit post soudage a malheureusement le désavantage de pouvoir laisser se développer des ruptures spontanées, même localisées, entre la soudure et le recuit.

Un autre inconvénient important d'une systématisation du recuit post soudage est une mise en oeuvre de températures de traitements très élevées (par exemple 800°C au lieu de 100 à 300°C pour un préchauffage) qui nécessitent des dispositions constructives particulières des machines de raboutage par soudage, en particulier au niveau de leurs mors de serrage, ou qui imposent de réaliser le recuit après réalisation totale de la soudure et déplacement de cette dernière hors de l'emprise desdits mors de serrage. Ce recuit après réalisation totale de la soudure et ce déplacement allongent le temps de cycle de soudage et nécessitent de plus une augmentation des capacités d'accumulation de bande des dispositifs d'accumulation de l'installation de traitement, engendrant ainsi des coûts supplémentaires.

Un but de la présente invention est de proposer un procédé et un dispositif de contrôle d'un cycle thermique d'une soudure de raboutage de bandes capables d'une part de définir au moins un paramètre de soudage, notamment un paramètre thermique de refroidissement de ladite soudure, en adéquation avec les caractéristiques matérielles et géométriques des bandes à souder, tout en tenant compte des caractéristiques fonctionnelles d'une machine de raboutage par soudage à laquelle ils sont adaptés, et d'autre part, de garantir une exécution en temps réel du soudage desdites bandes à souder en fonction dudit paramètre de soudage.

Dans ce but, un procédé et un dispositif de contrôle d'un cycle thermique d'une soudure de raboutage sont proposés par le contenu des revendications 1 et 8. Un ensemble de sous-revendications présente également des avantages de l'invention.

La présente invention a ainsi pour objet un procédé de contrôle automatique d'un cycle thermique d'une soudure de raboutage de bandes, destiné au contrôle d'un soudage d'une extrémité d'une première bande avec une autre extrémité d'une seconde bande par une machine de raboutage d'une installation de traitement conformément à la revendication 1.

La présente invention propose également un dispositif de contrôle d'un cycle thermique d'une soudure de raboutage d'une extrémité d'une première bande avec une autre extrémité d'une seconde bande conformément à la revendication 8.

A cette fin, les moyens de contrôle et de caractérisation comprennent en particulier des moyens de mesure et de réglage d'une quantité d'énergie de soudage disponible en sortie du dispositif de soudage, des moyens de mesures et de réglage d'une vitesse de déplacement du dispositif de soudage, des moyens de réglage du dispositif de traitement thermique des extrémités de bandes, et éventuellement, de moyens réglables d'un dispositif de recuit après soudage. En particulier, les moyens de contrôle et de caractérisation sont aptes à coopérer avec un dispositif de traitement thermique par induction comprenant au moins un inducteur, et capable de se déplacer de manière synchrone ou asynchrone avec un déplacement du dispositif de soudage, ledit dispositif de traitement thermique étant en particulier fixable à un support dudit dispositif de soudage, ou à un support séparé dudit support du dispositif de soudage.

Finalement, la présente invention a aussi pour objet une machine de raboutage destinée au raboutage d'extrémités de bandes successives d'une installation de traitement de bandes, ladite machine de raboutage comprenant un dispositif de soudage d'une extrémité d'une première bande avec une autre extrémité d'une seconde bande, deux paires de mors de serrage symétriquement disposés, respectivement, une première paire de mors de serrage comprenant un premier mors de serrage supérieur et un premier mors de serrage inférieur capables de pincer, i.e. capables de serrer étroitement entre eux, ladite extrémité de la première bande, et une seconde paire de mors de serrage comprenant un second mors de serrage supérieur et un second mors de serrage inférieur capables de pincer ladite autre extrémité de la seconde bande, destinés au maintien et au positionnement desdites extrémités de bande en vis-à-vis l'une de l'autre pour le soudage desdites extrémités de bandes l'une avec l'autre, qui comprend le dispositif de contrôle d'un cycle thermique. De plus, ladite machine de raboutage convient en particulier à la mise en oeuvre d'un procédé de raboutage caractérisé en ce qu'il comprend ledit procédé de contrôle automatique d'un cycle thermique d'une soudure de raboutage de bandes (voir revendication 15).

En particulier, ledit dispositif de contrôle du cycle thermique de la machine de raboutage selon l'invention est capable de coopérer avec ledit dispositif de traitement thermique, par exemple un dispositif de préchauffage et/ou un dispositif de recuit de ladite machine de raboutage, notamment en réglant des paramètres de fonctionnement dudit dispositif de traitement thermique, en contrôlant son fonctionnement et sa mise en route. Par exemple, le dispositif de contrôle selon l'invention est notamment apte à contrôler les moyens réglables du dispositif de recuit après soudage, qui peut selon une première variante, se déplacer en arrière du dispositif de soudage sur un support commun avec ledit dispositif de soudage ou sur un support séparé, synchrone ou non avec le déplacement du dispositif de soudage, ou, selon une seconde variante, être fixe et apte à couvrir toute la largeur de la bande à souder. De tels dispositifs de recuit sont par exemple implantables entre les mors de serrage, sous une face inférieure de la bande, ou, selon une autre variante, hors de l'emprise et en aval desdits mors de serrage, au-dessus et/ou au-dessous de la bande, afin de réaliser un traitement thermique de ladite soudure à un emplacement éloigné desdits mors de serrage.

La présente invention permet de contrôler le cycle thermique d'une soudure de raboutage de bandes en déterminant automatiquement, avant et/ou pendant le soudage, des paramètres de soudage optimaux notamment destinés à réguler ladite énergie de soudage apportée à la soudure pour chauffer lesdites extrémités de bandes. Conséquemment, la régulation de l'énergie de soudage apportée aux extrémités de bandes ou à la soudure permet de contrôler la structure métallurgique de la soudure. La détermination du paramètre thermique permet notamment de déterminer des conditions optimales de préchauffage à basse température des extrémités de bandes à souder, préférentiellement à un recuit post soudage à haute température, et permet ainsi ledit contrôle de la structure métallurgique de la soudure lors de son refroidissement.

En particulier, lesdits moyens de connexion permettent d'une part ledit premier échange d'au moins une donnée de bande relative à au moins une caractéristique d'une desdites bandes, entre le calculateur du dispositif de contrôle et le système central d'automatismes de l'installation de traitement afin de transmettre audit calculateur ladite donnée de bande, et d'autre part, ledit second échange d'au moins une donnée de fonctionnement relative au fonctionnement de la machine de raboutage, entre le calculateur et la machine de raboutage, afin de transmettre au calculateur ladite donnée de fonctionnement. Les données de bande comprennent des données géométriques et/ou physiques et/ou chimiques de chacune des deux bandes devant être soudées l'une avec l'autre. Les données de fonctionnement comprennent notamment des paramètres de réglage ou de soudage et/ou des données liées au fonctionnement en temps réel de la machine de raboutage, notamment de son dispositif de soudage et d'au moins un dispositif de traitement thermique. Il s'agit par exemple, et de manière non exhaustive, de données relatives à l'énergie de soudage disponible en sortie de la source d'énergie de soudage destinée à chauffer les extrémités de bandes devant être soudées ensembles, ou relatives à une énergie de soudage maximum disponible en sortie de ladite source d'énergie de soudage, ou encore de données concernant la vitesse de déplacement du dispositif de soudage le long de la ligne de soudage, ou de sa vitesse maximale et/ou minimale de déplacement, mais aussi de données ou paramètres de réglage relatifs à au moins un dispositif de traitement thermique de la machine de raboutage, comme sa vitesse de déplacement le long de la ligne de soudage, ou une corrélation entre sa vitesse de déplacement et la vitesse de déplacement du dispositif de soudage, ou encore, une donnée relative à une énergie thermique que le dispositif de traitement thermique est apte à produire.

A partir de ces données de bande et de fonctionnement, ledit calculateur est apte à calculer au moins ledit paramètre thermique de la soudure destiné en particulier à paramétrer un refroidissement des zones de bandes affectées par l'énergie de soudage en régulant notamment un apport en énergie apte à chauffer lesdites zones. D'autre part, le dispositif de contrôle selon l'invention comprend en particulier une base de données destinée à une classification, à partir d'au moins une desdites données de bande, de chacune des bandes dans au moins une famille de matériaux, chaque famille de matériaux comprenant au moins un matériau de référence caractérisé par au moins une donnée de référence destinée en particulier à l'identification et à la classification de ladite bande dans ladite famille de matériaux. Ledit matériau de référence est en particulier identifiable par au moins un élément de son analyse chimique, par exemple, une teneur en carbone ou un carbone équivalent. Lesdites données de référence comprennent en particulier au moins une caractéristique physique et/ou chimique du matériau de référence dont peut dépendre le soudage, par exemple une teneur en carbone ou un carbone équivalent, et/ou un paramètre de refroidissement critique, par exemple une vitesse de refroidissement critique ou un temps de refroidissement critique entre deux températures. En particulier, au moins une donnée de référence de chaque matériau de référence comprend un paramètre métallurgique critique en fonction d'une valeur de consigne ou permet de définir un comportement métallurgique en fonction d'un paramètre métallurgique afin de permettre une détermination dudit paramètre métallurgique critique en fonction de ladite valeur de consigne. Ledit paramètre métallurgique critique est notamment apte à être comparé audit paramètre thermique. La valeur de consigne est une donnée qui peut en particulier être entrée dans la base de données par un opérateur depuis un pupitre opérateur, et qui est apte à caractériser la soudure. Il s'agit par exemple d'une dureté maximum à ne pas dépasser pour ladite soudure, d'une structure métallographique voulue pour la soudure, ou d'un temps de refroidissement critique. En d'autres termes, le matériau de référence est caractérisé par une donnée de référence comprenant en particulier un paramètre métallurgique critique, par exemple un temps de refroidissement critique, en fonction d'une valeur de consigne, par exemple une dureté imposable par un opérateur, ou apte à définir un comportement métallurgique en fonction d'un paramètre métallurgique, par exemple une variation de la dureté en fonction d'un temps de refroidissement, permettant de définir un paramètre métallurgique critique, par exemple un temps de refroidissement critique, en fonction d'une valeur de consigne, par exemple, en fonction d'une dureté imposable par un opérateur.

Ladite base de données convient notamment au répertoriage de différentes familles de matériaux en fonction d'au moins un critère d'identification de matériaux, et/ou d'un comportement métallurgique de chacun desdits matériaux, et en particulier en fonction de ladite donnée de référence desdits matériaux de référence. Elle comprend par exemple des caractéristiques chimiques et/ou physiques d'au moins un matériau de référence pour chaque famille de matériaux. Avantageusement, la classification de chacune desdites bandes dans une famille de matériaux est notamment réalisable automatiquement par un module de classification dudit calculateur à partir de ladite donnée de bande. En effet, ledit module de classification est apte à déterminer une appartenance d'une bande à au moins une famille de matériaux par identification d'au moins une desdites données de bande et comparaison de ladite donnée de bande identifiée avec au moins une desdites données de référence des matériaux de référence de chaque famille. Ainsi, la présente invention permet de comparer au moins une donnée de bande à au moins une donnée de référence comprenant une information sur une caractéristique physique et/ou chimique d'un matériau de référence afin de classer ladite bande dans une famille de matériaux de ladite base de données.

En d'autres termes, le calculateur comprend un module de classification apte à classifier chaque bande dans au moins une famille de matériaux de ladite base de données à partir d'une lecture ou de l'identification d'au moins une donnée de bande. En particulier, à partir d'au moins une donnée de référence d'un matériau de référence de la base de données, le module de classification du calculateur est aussi capable d'extraire ledit paramètre métallurgique critique en fonction de ladite valeur de consigne si ce dernier est compris dans ladite donnée de référence, ou de le calculer si au moins une desdites données de référence permet de définir ledit comportement métallurgique en fonction dudit paramètre métallurgique. Dans ce cas, le module de classification est apte à déterminer, en fonction dudit comportement métallurgique, ledit paramètre métallurgique critique en fonction de ladite valeur de consigne.

En particulier, si les données de bande permettent au module de classification d'identifier un matériau de référence de ladite base de données dont au moins une donnée de référence correspond à une donnée de bande, i.e. si au moins une caractéristique physique et/ou chimique du matériau de référence correspond à au moins une caractéristique physique et/ou chimique de la bande, alors ledit module de classification est apte à établir une correspondance entre ladite bande et ledit matériau de référence en faisant notamment correspondre à ladite bande, ledit paramètre métallurgique critique. En particulier, le module de classification est apte à choisir le matériau de référence ayant la meilleure correspondance avec ladite bande i.e. ayant le plus grand nombre de données de référence égales aux données de bande, ou encore, comprenant le plus grand nombre de caractéristiques physiques et/ou chimiques communes avec ladite bande.

En particulier, si le module de classification ne trouve aucun matériau de référence de ladite base de données ayant au moins une donnée de référence identique à au moins une donnée de bande, alors le module de classification est apte à identifier au moins deux matériaux de référence pour lesquels au moins une donnée de référence comprend au moins une caractéristique physique et/ou chimique similaire ou proche à au moins une caractéristique physique et/ou chimique de la bande. Pour chacun des matériaux de référence identifiés, ledit module de classification est apte à extraire ou calculer ledit paramètre métallurgique critique, puis à extrapoler à partir de chacun desdits paramètres métallurgiques critiques de chacun desdits matériaux de référence, et notamment au moyen d'au moins un modèle d'extrapolation prédéfini, un paramètre métallurgique critique extrapolé. Dans tous les cas, le module de classification est apte à identifier ou à calculer pour chaque bande un paramètre métallurgique critique à partir d'au moins une desdites données de référence, et en fonction de ladite valeur de consigne.

Avantageusement, ladite base de données selon l'invention est actualisable: ledit calculateur est en particulier apte à mettre à jour ladite base de données en permettant une insertion, dans ladite base de données, d'au moins une nouvelle donnée de référence caractérisant un nouveau matériau de référence, ou une modification d'une donnée de référence caractérisant un matériau de référence déjà compris dans ladite base de données. Le nouveau matériau de référence est en particulier une bande d'acier dont une caractéristique physique et/ou chimique ne figure pas dans la base de données. Dans ce cas, une nouvelle donnée de référence est en particulier une donnée de bande relative à au moins une caractéristique physique et/ou chimique différente des caractéristiques physiques et/ou chimiques des matériaux de référence compris dans ladite base de données. De plus, le calculateur est en particulier apte à supprimer de la base de données, au moins une donnée de référence relative à un matériau de référence, par exemple un matériau de référence non usité pour le raboutage de bande. Avantageusement, ledit calculateur permet notamment à un opérateur d'entrer des caractéristiques de matériaux de référence dans ladite base de données à partir d'un pupitre opérateur. Ainsi, l'insertion d'au moins une nouvelle donnée de référence ou la modification d'au moins une donnée de référence préexistante dans la base de données permettent avantageusement une actualisation de la base de données en fonction de résultats de contrôles de soudures réalisables sur l'installation de traitement elle-même ou en laboratoire, et ainsi une adaptation du soudage en fonction desdits résultats de contrôles desdites soudures.

En outre, le procédé de contrôle selon l'invention est en particulier caractérisé en ce qu'il comprend une comparaison automatique et en temps réel dudit paramètre thermique avec ledit paramètre métallurgique critique. A cette fin, le calculateur comprend en particulier un module d'analyse apte à automatiquement comparer, notamment en temps réel, le paramètre métallurgique critique, qui peut par exemple être un paramètre métallurgique critique de refroidissement, avec ledit paramètre thermique qui peut être un paramètre thermique de refroidissement. Le module d'analyse est notamment apte à comparer une valeur du paramètre métallurgique critique à une valeur du paramètre thermique afin de déterminer une relation d'ordre (supérieur, inférieur, égal) entre lesdites valeurs.

Egalement, le procédé de contrôle selon l'invention est en particulier caractérisé en ce qu'un dépassement de la valeur dudit paramètre métallurgique critique (par exemple un temps critique de refroidissement) par la valeur dudit paramètre thermique (par exemple un temps de refroidissement calculé à partir des données de bande et de fonctionnement) est apte à induire, notamment automatiquement, une modification de la valeur d'au moins un paramètre de soudage de la machine de raboutage, afin de permettre à la valeur dudit paramètre thermique de retourner à une valeur en deçà de ladite valeur du paramètre métallurgique critique. Ledit dépassement fait référence par exemple à une valeur dudit paramètre thermique qui augmente et dépasse une valeur du paramètre métallurgique critique qui lui était préalablement supérieure, mais aussi à une valeur dudit paramètre thermique qui diminue et dépasse (devient inférieure) une valeur du paramètre métallurgique critique qui lui était préalablement inférieure. Avantageusement, ledit dépassement est identifiable par le module d'analyse lors de ladite comparaison des valeurs. De plus, dans le cas dudit dépassement et en cas d'identification dudit dépassement par le module d'analyse, le calculateur est en particulier apte à automatiquement calculer une nouvelle valeur d'au moins un paramètre de soudage, ladite nouvelle valeur étant destinée à maintenir la valeur du paramètre thermique en-deçà de la valeur du paramètre métallurgique critique. Par exemple, le paramètre thermique calculable en temps réel est un temps de refroidissement de la soudure entre deux températures de référence comprises par exemple entre 1000°C et 300°C, et le paramètre métallurgique critique est un temps critique de refroidissement entre deux autres températures de référence comprises par exemple entre 1000°C et 300°C, et en-dessous duquel au moins une caractéristique métallurgique d'une zone de la soudure atteint ladite valeur de consigne. La caractéristique métallurgique prise en compte peut être la structure métallographique (martensitique, bainitique, perlitique dans le cas d'un acier). Elle peut être aussi, de manière plus simple, une dureté. Dans le cas d'une dureté prise en compte comme caractéristique métallurgique, sa valeur de consigne, ou maximum tolérable, peut être fixée à une valeur supérieure à 300HV, de préférence comprise entre 380HV et 420HV.

Si le temps de refroidissement de la soudure dépasse le temps critique de refroidissement de la soudure, alors l'identification dudit dépassement par le module d'analyse induit un calcul par le calculateur d'au moins un nouveau paramètre de soudage destiné à diminuer ou augmenter le temps de refroidissement afin que la valeur du temps de refroidissement reste en-deçà de la valeur du temps critique de refroidissement. Le calculateur peut par exemple calculer un nouvel apport d'énergie thermique par ledit dispositif de traitement thermique de la machine de raboutage, en déterminant notamment une température de préchauffage de la soudure permettant audit paramètre thermique de rester en-deçà du paramètre métallurgique critique, sans changer d'autres paramètres de soudage. Il peut aussi déterminer une température de préchauffage de la soudure permettant audit paramètre thermique de rester en-deçà du paramètre métallurgique critique, en modifiant au moins un autre paramètre de soudage, comme l'énergie disponible en sortie de la source d'énergie de soudage, et/ou la vitesse de déplacement du dispositif de soudage. Dans ce dernier cas, les modifications de l'énergie disponible en sortie de la source d'énergie de soudage et/ou de la vitesse de déplacement du dispositif de soudage peuvent en particulier être limitées par des valeurs limites implantable dans un programme de calcul dudit calculateur. Ces valeurs limites peuvent être, par exemple, une capacité maximum de la source d'énergie de soudage ou un temps maximum de soudage.

La présente invention propose également un signalement dudit dépassement communicable par ledit dispositif de contrôle à ladite machine de raboutage et/ou à un pupitre opérateur, et destiné par exemple à avertir, visuellement et/ou auditivement, un opérateur. En particulier, ledit calculateur est apte à transmettre ladite nouvelle valeur dudit paramètre de soudage auxdits moyens de contrôle et de caractérisation du dispositif de contrôle, ces derniers étant en particulier aptes à signaler ladite nouvelle valeur dudit paramètre de soudage à ladite machine de raboutage et/ou audit pupitre opérateur. En particulier, lesdits moyens de contrôle et de caractérisation sont capables de délivrer à un opérateur sous forme d'au moins une recommandation, ladite nouvelle valeur dudit paramètre de soudage, en recommandant par exemple un nouveau temps de préchauffage et/ou une nouvelle vitesse de déplacement, et/ou une nouvelle énergie de soudage.

Egalement, lesdits moyens de contrôle et de caractérisation sont en particulier aptes piloter ledit soudage à partir de ladite nouvelle valeur dudit paramètre de soudage. En effet, le procédé de contrôle selon l'invention est en particulier caractérisé en ce que ledit contrôle, notamment en temps réel, dudit soudage dépend dudit paramètre métallurgique critique définissable en fonction de ladite valeur de consigne. Ledit paramètre métallurgique critique permet notamment de définir une valeur limite pour le paramètre thermique, et donc d'imposer au soudage au moins une contrainte de soudage susceptible de contraindre au moins un paramètre de soudage afin de limiter la valeur du paramètre thermique. En particulier, lesdits moyens de contrôle et de caractérisation sont capables de délivrer à la machine de raboutage ou au système central d'automatismes, au moins une consigne de réglage de la machine de raboutage, destinée par exemple à une mise en route du dispositif de traitement thermique (un dispositif de préchauffage et/ou de recuit) et à son réglage en fonction dudit nouveau paramètre de soudage.

Ainsi, le dispositif de contrôle selon l'invention est en particulier d'une part capable de déterminer à l'avance, i.e. avant le soudage, des paramètres de soudage en fonction desdites données de bande et de fonctionnement afin de régler au moins un dispositif de traitement thermique et le dispositif de soudage de la machine de raboutage, mais aussi d'autre part, il est capable de modifier en temps réel durant le soudage lesdits paramètres de soudage afin qu'ils respectent un ou plusieurs paramètres métallurgiques critiques prédéfinissables. A cette fin, le calculateur du dispositif de contrôle est notamment apte à recevoir durant toute la durée du soudage des valeurs de paramètres de soudage, comme par exemple une mesure de l'énergie disponible en sortie de la source d'énergie de soudage et/ou une mesure de la vitesse de déplacement du dispositif de soudage et/ou une mesure de temps et de température de ladite soudure. A partir des valeurs des paramètres de soudage mesurables en temps réel, le calculateur est apte à calculer en temps réel ledit paramètre thermique, à le comparer au paramètre métallurgique critique, et, en cas de dépassement de la valeur du paramètre métallurgique critique par la valeur du paramètre thermique, à communiquer ledit dépassement auxdits moyens de contrôle et de caractérisation afin de délivrer une consigne et/ou une recommandation à un opérateur et/ou à la machine de raboutage, ou à calculer au moins un nouveau paramètre de soudage destiné au pilotage de la machine de raboutage et permettant un retour de la valeur du paramètre thermique en-deçà de la valeur du paramètre métallurgique critique.

La présente invention propose également un procédé de raboutage d'extrémités de bandes successives adapté au raboutage de l'extrémité d'une première bande avec une autre extrémité d'une seconde bande par une machine de raboutage d'une installation de traitement de bandes, ledit procédé de raboutage comprenant notamment les étapes suivantes: un serrage de chacune des extrémités de bandes par un mors de serrage de la machine de raboutage; un découpage desdites extrémités, par exemple par des cisailles, afin de préparer lesdites extrémités en vue de leur jonction l'une avec l'autre; un positionnement desdites extrémités destiné à permettre leur soudage par un dispositif de soudage de la machine de raboutage; le soudage desdites extrémités par le dispositif de soudage, susceptible de coopérer avec un pré- et/ou un post-chauffage desdites extrémités au moyen d'un dispositif de traitement thermique, caractérisé en ce qu'il comprend ledit contrôle automatique du cycle thermique d'une soudure, en particulier apte à coopérer avec ledit soudage desdites extrémités de bandes, notamment avec le pré- et/ou post-chauffage desdites extrémités. En effet, ledit soudage selon l'invention est contrôlable en temps réel par les moyens de réglage et de caractérisation dudit dispositif de contrôle, afin de contrôler le cycle thermique de la soudure et de garantir une soudure de qualité.

Des exemples de réalisation et d'application de la présente invention sont fournis à l'aide des figures suivantes :

Figure 1    Exemple de répartition spatiale d'une chaleur d'une soudure lors d'un soudage de deux extrémités de bandes;

Figure 2    Exemple de cycles thermiques et de répartitions transversales de températures d'une soudure;

Figure 3    Exemple de l'influence d'une vitesse de refroidissement sur une structure métallurgique et une dureté d'une zone affectée par une soudure d'acier;

Figure 4    Exemple de réalisation d'un dispositif de contrôle d'un cycle thermique d'une soudure de raboutage selon l'invention;

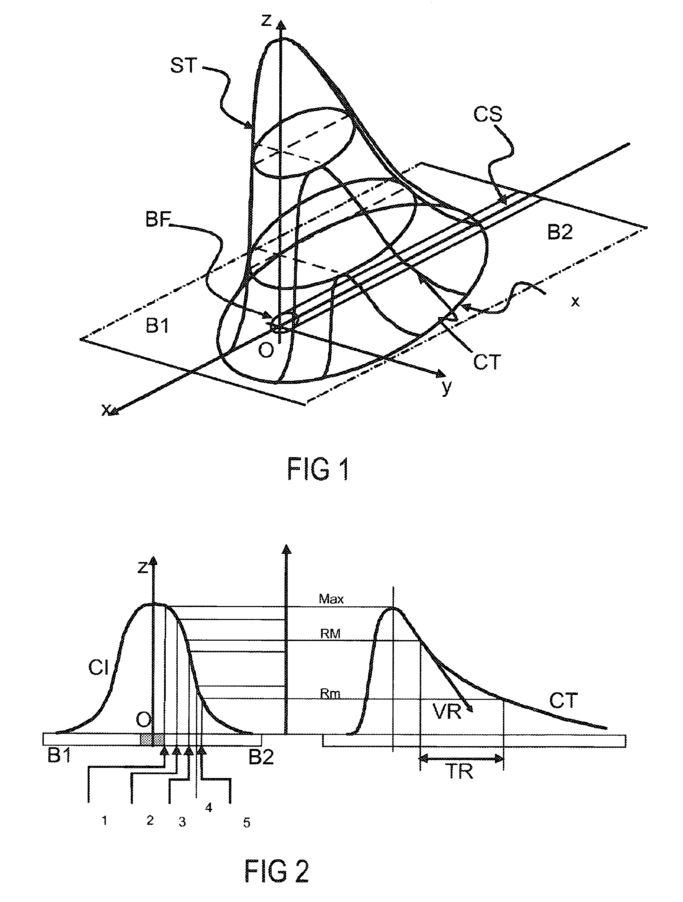

La figure 1 présente un exemple de répartition spatiale d'une chaleur d'une soudure lors d'un soudage de deux extrémités de bandes. La source d'énergie de soudage du dispositif de soudage est en particulier une source de chaleur, par exemple un arc électrique, un faisceau laser ou une résistance électrique, capable de chauffer au moins une zone comprenant au moins une partie de chacune des extrémités des bandes B1, B2 et de se déplacer le long des bords desdites extrémités de bandes en suivant une ligne de soudure CS, lesdits bords étant en vis-à-vis l'un de l'autre, afin de permettre leur chauffage et leur soudure l'un avec l'autre. Sous l'effet de cette source de chaleur, un bain de fusion BF comprenant du matériau en fusion de chacune desdites bandes B1, B2 et d'éventuellement un métal d'apport sous forme par exemple d'un fil métallique, se forme et permet de faire adhérer en un tout continu lesdites bandes en assurant une liaison intime de leurs bords. Les deux bandes B1, B2 sont alors aptes à former une bande continue. La chaleur du bain de fusion se transmet par conduction tout autour du bain de fusion BF. Des courbes isothermes $\theta_x$ se développent autour du bain de fusion BF avec une forme typique d'ovoïde allongée vers l'arrière du bain par rapport au sens de déplacement du dispositif de soudage (selon x). Une représentation tridimensionnelle d'une répartition spatiale globale des températures autour du bain de fusion BF peut être construite en considérant un repère orthonormé centré en un centre O du bain de fusion, comprenant un axe x passant par la ligne de soudure CS, un axe y perpendiculaire à ladite ligne de soudure CS et donc parallèle au sens de défilement de la bande, et en affectant des températures à un axe z perpendiculaire au plan de défilement formé par les bandes et passant par le centre O du bain de fusion BF. Une coupe de ce solide thermique ST par un plan parallèle à la ligne de soudure CS (i.e. parallèle l'axe x) et perpendiculaire au plan de défilement de la bande permet d'obtenir une courbe de l'évolution de la température d'un point de la bande situé dans ledit plan parallèle en fonction du déplacement de la source d'énergie de soudage du dispositif de soudage. Cette évolution de la température en fonction du déplacement de la source d'énergie de soudage est habituellement nommée cycle thermique CT du point.

La figure 2 montre un exemple de cycle thermique CT et de répartition transversale des températures d'une soudure. La courbe CI représente la répartition transversale des températures. Il s'agit d'une coupe transversale du solide thermique ST présenté en figure 1, i.e. selon un plan perpendiculaire à la surface des bandes B1, B2, et perpendiculaire à une direction de déplacement de la source d'énergie de soudage et passant par le bain de fusion. La courbe CI est symétrique par rapport au plan perpendiculaire à la surface desdites bandes B1, B2 et passant par la ligne de soudure des bandes B1, B2. Elle représente en particulier la variation de température maximale atteinte par chaque point d'une ligne parallèle à l'axe y, passant par le centre du bain de fusion et perpendiculaire à la ligne de soudage. Cette température maximale diminue lorsqu'on s'éloigne du bain de fusion selon l'axe y et entraîne, selon les zones, des modifications métallurgiques complexes:

- au voisinage du bain de fusion, entre une première température $\theta_1$ et une seconde température $\theta_2$ inférieure à ladite première température $\theta_1$, par exemple, respectivement entre environ 1500°C et 1200°C, un grossissement très important du grain austénitique confère généralement au métal une très forte trempabilité avec développement de structures aciculaires dures et fragiles;

- entre la seconde température $\theta_2$, par exemple 1200°C, et une troisième température $\theta_3$ inférieure à ladite seconde température $\theta_2$, un ensemble de structures allant d'une structure normalisée à des structures grossières pouvant présenter des constituants de trempe est généralement observé;

- entre la troisième température $\theta_3$ et une quatrième température $\theta_4$ inférieure à ladite troisième température $\theta_3$, des structures fines complexes typiques des transformations rapides dans le domaine intercritique apparaissent;

- entre la quatrième température $\theta_4$ et une cinquième température $\theta_5$ inférieure à la quatrième température $\theta_4$ et égale par exemple à environ 600°C, certains phénomènes métallurgiques sont observables, comme par exemple une coalescence de certains dispersoïdes, un sur-revenu de structures trempées revenues;

- à une température inférieure à la cinquième température $\theta_5$, il est usuellement considéré qu'aucune modification structurelle notable ne se produit.

Un point d'une extrémité desdites bandes, ou de la soudure, pour lequel le cycle thermique CT est susceptible d'atteindre une température maximale $\theta_{Max}$ située entre la première température $\theta_1$ et la seconde température $\theta_2$ est un point pour lequel il y a un fort risque de fragilisation de la soudure. En effet, en fonction du temps que prendra ledit point pour refroidir, différentes structures métallurgiques peuvent apparaître, chacune se rapportant à un degré de qualité différent de la soudure. Afin d'éviter la fragilisation de la soudure, la présente invention propose de contrôler la structure métallurgique de la soudure en contrôlant notamment un paramètre thermique, comme par exemple une vitesse de refroidissement de la soudure. En effet, il est possible de calculer et de contrôler pour un tel point, ledit paramètre thermique, par exemple une vitesse instantanée de refroidissement $VR_\theta$ ou un temps de refroidissement TR entre une première température de référence $\theta_{RM}$ et une seconde température de référence $\theta_{Rm}$ inférieure à ladite première température de référence $\theta_{Rm}$, lesdites températures de référence définissant en particulier un intervalle de température compris entre 1000°C et 300°C, par exemple un ensemble de températures comprises entre 800°C et 500°C ou entre 700°C et 300°C. Afin de calculer cette vitesse instantanée de refroidissement $VR_\theta$ ou ce temps de refroidissement TR, il est possible d'identifier sur le solide thermique une zone ayant été soumise à ladite température maximale $\theta_{Max}$ et d'y appliquer un modèle mathématique apte à estimer ladite vitesse instantanée de refroidissement $VR_\theta$ ou ledit temps de refroidissement TR, comme par exemple le modèle de Rykaline.

En particulier, en connaissant l'énergie de soudage disponible en sortie de la source d'énergie de soudage du dispositif de soudage, ainsi que la vitesse de déplacement dudit dispositif de soudage (ou de la source d'énergie de soudage si cette dernière se déplace indépendamment du dispositif de soudage qui pourrait par exemple être fixe par rapport à la bande), il est possible de calculer le temps de refroidissement TR dudit point de la bande entre lesdites première et seconde températures de référence $\theta_{RM}$, $\theta_{Rm}$. Ce calcul du temps de refroidissement TR est par exemple possible en intégrant, entre la première température de référence $\theta_{RM}$ et la seconde température de référence $\theta_{Rm}$, une formule mathématique (1) de variation d'une vitesse instantanée de refroidissement $VR_\theta$ entre lesdites première et seconde températures de référence $\theta_{RM}$, $\theta_{Rm}$. Dans le cas d'une première bande identique (i.e. même matériau, même caractéristiques géométriques) à une seconde bande, ladite formule mathématique (1) est par exemple:

$$VR_\theta = \frac{2\pi k \rho C_v (\theta - \theta_0)^3 e^2}{E_{eq}^{\,2}} \qquad (1)$$

avec

$VR_\theta$ = vitesse instantanée de refroidissement dudit point de la bande lors d'un passage dudit point de la bande à une température quelconque $\theta$ comprise entre la première température de référence $\theta_{RM}$ et la seconde température de référence $\theta_{Rm}$, la vitesse instantanée de refroidissement $VR_\theta$ étant exprimée en kelvin par seconde, et ladite température $\theta$ quelconque étant exprimée en kelvin. En d'autres termes, la vitesse instantanée de refroidissement $VR_\theta$ est la vitesse de refroidissement à la température quelconque $\theta$;

Eq = Energie de soudage disponible en sortie de la source d'énergie de soudage par unité de longueur de soudure, exprimée en Joule par mètre;

$\rho$ = masse volumique du matériau de la bande à la température quelconque $\theta$, exprimée en kilo par mètre cube;

$c_v$ = chaleur massique du matériau de la bande à la température quelconque $\theta$, exprimée en Joule par kilo par kelvin;

$\theta_0$ = température initiale dudit point de la bande, exprimée en kelvin. Ladite température initiale $\theta_0$ peut par exemple être une température de préchauffage dudit point de la bande, ou une température ambiante;

k = conductivité thermique du matériau de la bande, exprimée en Joule par mètre par seconde par kelvin;

e = épaisseur de la bande à souder, exprimée en mètre.

Le calcul du temps de refroidissement TR peut également tenir compte d'un éventuel effet de refroidissement provenant d'un transfert de chaleur dudit point de la bande aux mors de serrage de la machine de raboutage. La formule mathématique (1) permet par exemple de contrôler le temps de refroidissement d'un point de la bande entre lesdites températures de référence $\theta_{RM}$, $\theta_{Rm}$ en modifiant l'énergie Eq disponible en sortie de la source d'énergie de soudage et/ou la température initiale $\theta_0$.

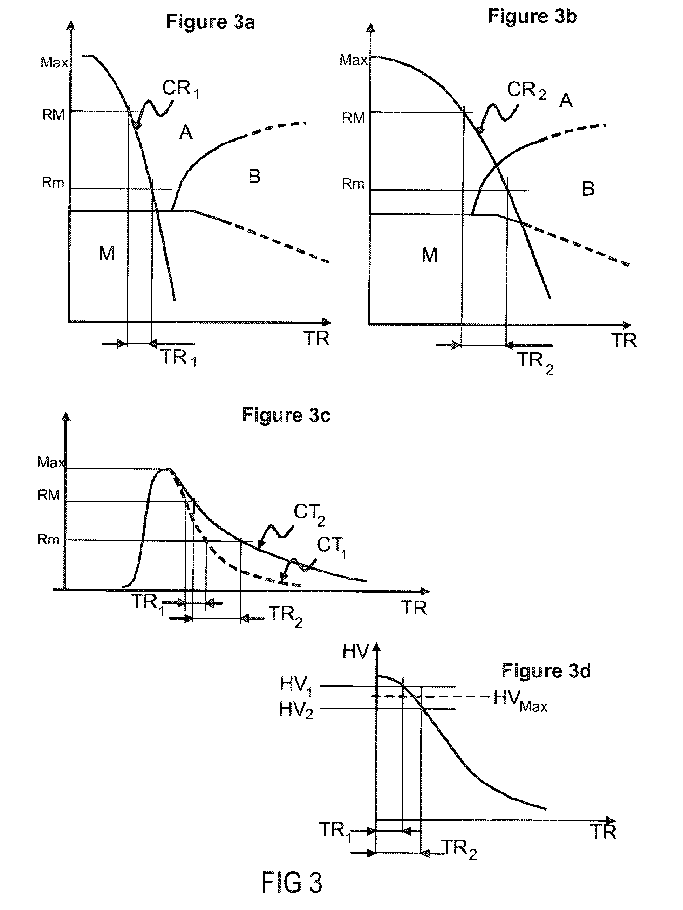

La figure 3 présente quatre différents graphiques représentant schématiquement des comportements métallurgiques. Les trois premiers graphiques (Figure 3a, 3b et 3c) comportent chacun, en abscisse, un premier axe représentant une échelle temporelle croissante d'un temps de refroidissement TR, et en ordonnée, un second axe représentant une échelle de température $\theta$ elle aussi croissante depuis l'origine desdits axes. Le quatrième graphique (Figure 3d) présente une variation de la dureté d'une soudure d'une bande en acier en fonction d'un temps de refroidissement TR de ladite soudure. Les quatre différents graphiques permettent de mettre en évidence le rôle d'une vitesse de refroidissement d'une zone affectée par une soudure d'acier sur la structure métallurgique et la dureté de ladite zone.

Le premier graphique (Figure 3a) montre l'évolution de la structure métallographique d'une soudure pendant son refroidissement à partir d'une température maximale $\theta_{Max}$. Le graphique comprend trois domaines délimités de manière simplifiée: un domaine austénitique A, un domaine martensitique M, et un domaine bainitique B. Une première courbe de refroidissement $CR_1$, correspondant à un premier temps de refroidissement $TR_1$ très court, traverse le domaine austénitique A, puis le domaine martensitique M, conduisant à une structure finale martensitique de la soudure, potentiellement dure et fragile.

Le deuxième graphique (Figure 3b) reprend les mêmes domaines que présenté en Fig. 3a, et montre l'évolution de la structure métallographique d'une soudure lors de son refroidissement à partir de la même température maximale $\theta_{Max}$ et pendant un deuxième temps de refroidissement $TR_2$ plus long que ledit premier temps de refroidissement $TR_1$, selon une seconde courbe de refroidissement $CR_2$ conduisant à une structure finale bainitique.

Le troisième graphique (Figure 3c) montre un premier cycle thermique $CT_1$ correspondant à la premiè-

re courbe de refroidissement $CR_1$ ainsi qu'un second cycle thermique $CT_2$ correspondant à la seconde courbe de refroidissement $CR_2$. Par application d'un modèle mathématique apte à estimer le temps de refroidissement TR, par exemple en intégrant entre deux températures $\theta_{RM}$ et $\theta_{Rm}$ la formule mathématique (1) d'estimation de la vitesse instantanée de refroidissement $VR_\theta$, le calculateur selon l'invention est notamment capable de déterminer quelle température de préchauffage $\theta_0$ et/ou quelle énergie $E_q$ disponible en sortie de la source d'énergie de soudage par unité de longueur de soudure seraient nécessaires afin d'augmenter le temps de refroidissement TR afin qu'il soit égal au deuxième temps de refroidissement $TR_2$ correspondant à la deuxième courbe de refroidissement $CR_2$. Dans ce cas, le paramètre métallurgique est le temps de refroidissement TR et le paramètre métallurgique critique est le temps de refroidissement $TR_2$. Le temps de refroidissement $TR_2$ est déterminable à partir du comportement métallurgique décrit en Figure 3b pour le paramètre métallurgique (temps de refroidissement TR) en fonction des températures de référence $\theta_{RM}$, $\theta_{Rm}$ et en fonction d'une structure métallurgique bainitique B choisie comme valeur de consigne.

Le quatrième graphique (Figure 3d) présente un comportement métallurgique qui montre l'évolution de la dureté HV d'une zone de la soudure refroidie à partir de la température maximale $\theta_{Max}$ en fonction du temps de refroidissement TR. La première courbe de refroidissement $CR_1$ conduit à une première dureté $HV_1$ supérieure à une dureté maximum $HV_{Max}$ fixée qui peut être par exemple une valeur de consigne, alors que la deuxième courbe de refroidissement $CR_2$ conduit à une deuxième dureté $HV_2$ légèrement inférieure à la dureté maximum $HV_{Max}$. Le dispositif de contrôle selon l'invention est capable de contrôler ce temps de refroidissement TR en modifiant et en contrôlant des paramètres dont il dépend, comme l'énergie Eq, ou la température de préchauffage $\theta_0$. Afin de modifier ces paramètres, le dispositif de contrôle selon l'invention est notamment capable de contrôler et de régler la machine de raboutage en fonction desdits paramètres. En particulier, ce quatrième graphique peut être interprété de la façon suivante par rapport à la présente invention: la dureté HV est le paramètre métallurgique, la dureté maximum $HV_{Max}$ est le paramètre métallurgique critique déterminable à partir, d'une part, de données de référence aptes à caractériser la dureté HV d'un matériau de référence en fonction d'un temps de refroidissement TR dudit matériau de référence, et d'autre part, à partir d'une valeur de consigne entrée par un opérateur dans la base de donnée et définissant par la valeur de la dureté maximum $HV_{Max}$ une dureté limite à ne pas dépasser.

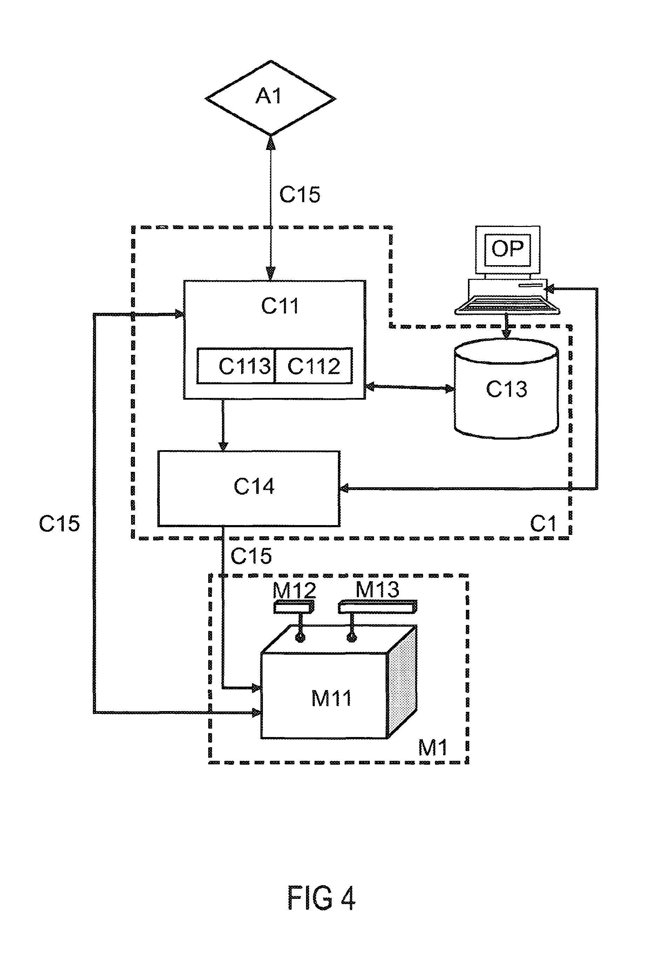

La figure 4 présente un exemple de réalisation d'un dispositif de contrôle C1 d'un cycle thermique d'une soudure de raboutage selon l'invention, convenant pour la mise en oeuvre du procédé de contrôle automatique du cycle thermique d'une soudure de raboutage de bandes.

Le dispositif de contrôle C1 est adapté à une machine de raboutage M1 d'une installation de traitement de bandes (non représentée), ladite machine de raboutage M1 comprenant notamment un dispositif de soudage M11 apte à souder une extrémité d'une première bande à une autre extrémité d'une seconde bande, deux paires de mors de serrage aptes à immobiliser lesdites extrémités de bande, au moins un dispositif de traitement thermique M12, M13 apte à traiter thermiquement lesdites extrémités de bandes, par exemple un dispositif de préchauffage par induction M12 et un dispositif de recuit M13, ledit dispositif de contrôle C1 étant caractérisée en ce qu'il comprend:

- des moyens de connections C15 destinés à connecter ledit dispositif de contrôle C1 à un système central d'automatismes A1 de ladite installation de traitement de bandes et à ladite machine de raboutage M1 afin de permettre respectivement un échange d'au moins une donnée de bande avec ledit système central d'automatismes A1 et un échange d'au moins une donnée de fonctionnement de la machine de raboutage avec ladite machine de raboutage M1. Le système central d'automatismes A1 de l'installation de traitement de bande comprend en particulier différentes informations/données au sujet des bandes en cours de traitement, et est capable d'échanger ces informations/données avec ledit dispositif de contrôle C1 au moyen desdits moyens de connections C15;

- un calculateur C11 apte à calculer ou à déterminer, à partir desdites données de bande et de fonctionnement, au moins un paramètre thermique de ladite soudure. Ce paramètre thermique est par exemple un temps de refroidissement de ladite soudure déterminable à partir d'une formule mathématique intégrant dans ses paramètres au moins une partie desdites données de bande et de fonctionnement;

- des moyens de contrôle et de caractérisation C14 du soudage de ladite soudure aptes à contrôler ledit soudage en fonction dudit paramètre thermique, et comprenant en particulier des moyens de mesure et de réglage d'une quantité d'énergie de soudage disponible par unité de longueur de soudure, des moyens de mesures et de réglage d'une vitesse de déplacement du dispositif de soudage, des moyens de réglage du dispositif de traitement thermique des extrémités de bandes, et éventuellement, de moyens réglables d'un dispositif de recuit après soudage.

En particulier, le calculateur C11 est apte à recevoir du système d'automatismes A1 de l'installation de traitement, des données concernant les bandes à souder. Il est aussi apte à recevoir de la machine de raboutage M1 par soudage au moins une donnée de fonctionnement, par exemple une valeur de l'énergie de soudage disponible en sortie de la source d'énergie de soudage du dispositif de soudage M11 et une vitesse de déplacement du dispositif de soudage M11 comprenant la dite source d'énergie de soudage. Le calculateur C11 est en particulier apte à effectuer au moins un calcul thermique à partir d'au moins un modèle thermique, tel que par exemple la formule mathématique (1) permettant d'obtenir ledit paramètre thermique à partir desdites données de bande et de fonctionnement. Ce paramètre thermique est par exemple un temps de refroidissement TR de la soudure entre une première température de référence $\theta_{RM}$ supérieure à une seconde température de référence $\theta_{Rm}$ tel que présenté précédemment dans les figures 2 et 3.

Le dispositif de contrôle C1 comporte en particulier une base de données C13 de familles de matériaux destinée à la classification de la bande dans au moins une famille de matériaux de ladite base de données à partir desdites données de bande. Il s'agit par exemple d'aciers classés par familles d'aciers, chaque famille d'aciers comportant au moins un acier de référence caractérisé par une donnée de référence, permettant par exemple d'identifier ledit acier de référence au moyen d'au moins une caractéristique physique et/ou chimique, par exemple par un élément de son analyse chimique comme sa teneur en carbone ou son carbone équivalent. Cette base de données C13 est en particulier apte à recevoir des mises à jour directement depuis un pupitre opérateur OP et/ou par l'intermédiaire du système central d'automatismes A1 et/ou par le calculateur C11. A chaque matériau de référence de chaque famille de matériaux, par exemple à chaque acier de référence de chaque famille d'aciers, est associable au moins un paramètre métallurgique critique. Le paramètre métallurgique critique est en particulier un paramètre critique de refroidissement, par exemple un temps de refroidissement critique entre la première température de référence $\theta_{RM}$ et la seconde température de référence $\theta_{Rm}$ correspondant à une valeur maximale de dureté prédéfinie, tel que décrit dans les figures 2 et 3. Ledit paramètre métallurgique critique est en particulier soit une donnée de référence du matériau de référence dans la base de données, soit une donnée calculable par un module de classification C112 à partir d'au moins une donnée de référence du matériau de référence, si au moins une desdites données de référence permet de définir un comportement métallurgique dudit matériau de référence en fonction d'un paramètre métallurgique.

Le module de classification C112 est en particulier compris dans le calculateur C11. De plus, il est en particulier apte à recevoir lesdites données de bande destinées à l'identification du matériau de la bande, et apte à classifier la bande dans une famille de matériaux de ladite banque de données à partir desdites données. En particulier, le module de classification C112 est apte à rechercher dans la base de données C13 au moins une famille de matériaux à laquelle ladite bande est susceptible d'appartenir, et à identifier, au sein de cette famille de matériaux, au moins un matériau de référence caractérisé par au moins une donnée de référence, par exemple un acier de référence d'une famille d'aciers, ladite donnée de référence étant au moins une caractéristique physique et/ou chimique comparable ou identique aux caractéristiques physiques et/ou chimiques de la bande, ou autrement dit, comparable ou identique à une desdites données de bande. Le module de classification C112 est en particulier capable d'extraire de la base de données C13 ledit paramètre métallurgique critique à partir d'au moins une desdites données de référence. Ce paramètre métallurgique critique est par exemple un temps de refroidissement d'un point de la bande qui caractérise le temps nécessaire pour que ledit point passe de la première température de référence $\theta_{RM}$ à la seconde température de référence $\theta_{RM}$, cette dernière pouvant correspondre par exemple à une valeur maximale de dureté prédéfinie. Ledit paramètre métallurgique critique est en particulier extractible, ou calculable, à partir d'au moins une desdites données de référence du matériau de référence. Egalement, le module de classification C112 selon l'invention est en particulier capable de déterminer, à partir d'au moins une première et une seconde donnée de référence de respectivement un premier et un second matériau de référence, ayant chacun au moins une caractéristique physique et/ou chimique comparable aux caractéristiques physiques et/ou chimiques de la bande, un comportement métallurgique médian susceptible de correspondre au comportement métallurgique de la soudure, et destiné à la détermination dudit paramètre métallurgique critique. Egalement, le module de classification C112 est en particulier capable d'extrapoler à partir d'au moins deux paramètres métallurgiques critiques de respectivement au moins deux matériaux de référence ayant chacun au moins une caractéristique physique et/ou chimique proche d'une caractéristique physique et/ou chimique de la bande à souder, par exemple une teneur en carbone ou un carbone équivalent, un paramètre métallurgique intermédiaire susceptible de caractérisé le comportement métallurgique de la bande et de servir de limite pour ledit paramètre thermique.

Le calculateur C11 comprend en particulier un module d'analyse C113 apte à automatiquement comparer, en temps réel, le paramètre métallurgique critique avec ledit paramètre thermique déterminable par calcul par ledit calculateur C11. Par exemple, le paramètre thermique est un temps de refroidissement TR entre la première et la seconde température de référence $\theta_{RM}$, $\theta_{Rm}$, calculable en fonction de l'énergie de soudage et de la vitesse de déplacement du dispositif de soudage M11 comprenant ladite source d'énergie de soudage. Ce temps de refroidissement est susceptible d'être comparé par ledit module d'analyse C113 avec un paramètre métallurgique critique extrait ou extrapolé des données de référence de la base de données, qui peut notamment être un paramètre critique de refroidissement, par exemple un temps de refroidissement critique. Avantageusement, si la valeur du paramètre thermique dépasse la valeur du paramètre métallurgique critique, par exemple, si la valeur du temps de refroidissement TR dépasse la valeur du temps de refroidissement critique, alors, le calculateur C11 est capable de calculer en temps réel au moins un paramètre de soudage, destiné au pilotage et/ou au contrôle du soudage, apte à maintenir la valeur du paramètre thermique en-deçà de la valeur du paramètre métallurgique critique. De plus, ledit calculateur C11 est en particulier capable de communiquer ledit nouveau paramètre de soudage auxdits moyens de contrôle et de caractérisation C14 du dispositif de contrôle C1 afin que ces derniers en tiennent compte pour le contrôle du soudage en temps réel des extrémités de bandes à souder. Lesdits moyens de contrôle et de caractérisation C14 sont en particulier capables de piloter en temps réel la machine de raboutage selon un cycle thermique défini en fonction dudit paramètre thermique et de données mesurables en cours de soudage (température de la soudure, énergie disponible, ...).

Selon un premier mode de réalisation, lesdits moyens de contrôle et de caractérisation C14 sont en particulier capables de délivrer une information au pupitre opérateur OP, ladite information étant destinée à signaler ledit dépassement à un opérateur afin que ce dernier puisse procéder à un réglage des paramètres de soudage depuis le pupitre opérateur OP, comme par exemple un préchauffage au moyen du dispositif de traitement thermique M12 ou une modification de l'énergie de soudage. Selon un seconde mode de réalisation, lesdits moyens de contrôle et de caractérisation C14 sont en particulier capables de modifier automatiquement les paramètres de soudage de la machine de soudage en y intégrant ledit nouveau paramètre de soudage. En effet, le procédé de contrôle automatique selon l'invention est caractérisé en ce que les lesdits moyens de contrôle et de caractérisation C14 sont capables de transmettre, soit au système central d'automatismes A1, soit directement à la machine de raboutage M1, ou en particulier directement au dispositif de soudage M11, une consigne de réglage comprenant un nouvel ensemble de paramètres de soudage comprenant ledit nouveau paramètre de soudage. Le nouvel ensemble de paramètres de soudage est destiné à régler la machine de raboutage de sorte que le paramètre thermique soit capable de retourner à une valeur en-deçà de la valeur du paramètre métallurgique critique.

Finalement, le procédé de contrôle selon l'invention et le dispositif de contrôle pour sa mise en oeuvre présentent donc de nombreuses améliorations par rapport aux pratiques existantes:

- ils permettent un contrôle du cycle de soudage d'une soudure de raboutage et une détermination de conditions optimales de soudure en vue de contrôler la structure métallurgique de la soudure par calcul et contrôle d'au moins un paramètre thermique et ce conformément à la presente invention ;
- ils permettent une adéquation précise entre le cycle thermique d'une soudure et les caractéristiques métallurgiques (i.e. physiques et/ou chimiques) du matériau de la bande;
- ils permettent de privilégier des opérations de préchauffage à températures modérées au lieu de recuits post soudage à hautes températures;
- ils permettent d'éliminer des risques de mauvaise estimation de la part des opérateurs;
- ils permettent une actualisation continue de la base de données des matériaux de référence sans complexifier la tâche de l'opérateur;
- ils permettent une adaptation en temps réel des paramètres de soudage, et ainsi un pilotage en temps réel des cycles thermiques des matériaux de bande à souder.

## Revendications

1. Procédé de contrôle automatique d'un cycle thermique d'une soudure de raboutage de bandes, destiné au contrôle d'un soudage d'une extrémité d'une première bande avec une autre extrémité d'une seconde bande par une machine de raboutage (M1) d'une installation de traitement, **caractérisé par**:

   - un premier échange d'au moins une donnée de bande entre un dispositif de contrôle (C1) dudit cycle thermique et un système central d'automatismes (A1) de ladite installation de traitement;
   - un second échange d'au moins une donnée de fonctionnement entre ledit dispositif de contrôle (C1) dudit cycle thermique et ladite machine de raboutage (M1) ;
   - une détermination à partir desdites données de bande et de fonctionnement, d'un paramètre thermique de ladite soudure pour le contrôle de la structure métallurgique de la soudure;
   - un contrôle dudit soudage dépendant au moins dudit paramètre thermique et un contrôle de la structure métallurgique de la soudure par calcul et contrôle dudit paramètre thermique.

2. Procédé de contrôle selon la revendication 1, **caractérisé en ce qu'**il comprend une classification automatique de chacune desdites bandes dans au moins une famille de matériaux comprenant au moins un matériau de référence **caractérisé par** au moins une donnée de référence.

3. Procédé de contrôle selon une des revendications 1 à 2, **caractérisé en ce qu'**il comprend une comparaison automatique et en temps réel dudit paramètre thermique avec un paramètre métallurgique critique.

4. Procédé de contrôle selon revendication 3, **caractérisé en ce que** ledit contrôle dudit soudage dépend dudit paramètre métallurgique critique définissable à partir d'une valeur de consigne.

**5.** Procédé de contrôle selon une des revendications 3 ou 4, **caractérisé en ce qu'**un dépassement de la valeur dudit paramètre métallurgique critique par la valeur dudit paramètre thermique est apte à induire une modification de la valeur d'au moins un paramètre de soudage.

**6.** Procédé de contrôle selon la revendication 5, **caractérisé par** un signalement dudit dépassement.

**7.** Procédé de raboutage d'extrémités de bandes successives adapté au raboutage de l'extrémité d'une première bande avec une autre extrémité d'une seconde bande par une machine de raboutage (M1) d'une installation de traitement de bandes, **caractérisé en ce qu'**il comprend le contrôle automatique du cycle thermique d'une soudure selon revendication 1.

**8.** Dispositif de contrôle (C1) d'un cycle thermique d'une soudure de raboutage d'une extrémité d'une première bande avec une autre extrémité d'une seconde bande, adapté à une machine de raboutage (M1) d'une installation de traitement de bandes, **caractérisé en ce qu'**il comprend:

- des moyens de connections (C15) destinés à connecter ledit dispositif de contrôle (C1) respectivement à un système central d'automatismes (A1) de ladite installation de traitement de bandes et à ladite machine de raboutage (M1), afin de permettre respectivement un échange d'au moins une donnée de bande et un échange d'au moins une donnée de fonctionnement;
- un calculateur (C11) apte à calculer, à partir desdites données de bande et de fonctionnement, au moins un paramètre thermique de ladite soudure pour un contrôle de la structure métallurgique de la soudure par calcul et contrôle dudit paramètre thermique;
- des moyens de contrôle et de caractérisation (C14) du soudage de ladite soudure aptes à contrôler ledit soudage en fonction dudit paramètre thermique.

**9.** Dispositif de contrôle (C1) d'un cycle thermique selon revendication 8, **caractérisé en ce qu'**il comprend une base de données (C13) destinée à une classification de chacune des bandes dans au moins une famille de matériaux comprenant au moins un matériau de référence **caractérisé par** au moins une donnée de référence.

**10.** Dispositif de contrôle (C1) d'un cycle thermique selon revendication 9, **caractérisé en ce que** le calculateur (C11) comprend un module de classification (C112) apte à classifier chaque bande dans au moins une famille de matériaux de ladite base de données (C13) et à extraire ou calculer au moins un paramètre métallurgique critique à partir d'au moins une donnée de référence d'au moins un matériau de référence.

**11.** Dispositif de contrôle (C1) d'un cycle thermique selon la revendication 10, **caractérisé en ce que** le module de classification (C112) est apte à comparer le paramètre métallurgique critique avec ledit paramètre thermique.

**12.** Dispositif de contrôle (C1) d'un cycle thermique selon une des revendications 10 ou 11, **caractérisé en ce que** ledit calculateur (C11) est apte à automatiquement calculer, dans le cas d'un dépassement de la valeur du paramètre métallurgique critique par la valeur du paramètre thermique, une nouvelle valeur d'au moins un paramètre de soudage destinée à maintenir la valeur du paramètre thermique en-deçà de la valeur du paramètre métallurgique critique.

**13.** Dispositif de contrôle (C1) d'un cycle thermique selon la revendication 12, **caractérisé en ce que** lesdits moyens de contrôle et de caractérisation (C14) sont aptes à signaler ladite nouvelle valeur dudit paramètre de soudage.

**14.** Dispositif de contrôle (C1) d'un cycle thermique selon la revendication 12, **caractérisé en ce que** lesdits moyens de contrôle et de caractérisation (C14) sont aptes piloter ledit soudage à partir de ladite nouvelle valeur dudit paramètre de soudage.

**15.** Machine de raboutage (M1) destinée au raboutage d'extrémités de bandes successives d'une installation de traitement de bandes, **caractérisée en ce qu'**elle comprend le dispositif de contrôle (C1) d'un cycle thermique selon revendication 8.

**Patentansprüche**

**1.** Verfahren zur automatischen Steuerung einer Temperatur-Zeit-Folge einer Stumpfschweißung von Bändern zur Steuerung einer Schweißung eines Endes eines ersten Bandes an ein anderes Ende eines zweiten Bandes mit einer Stumpfschweißmaschine (M1) einer Behandlungsanlage, **gekennzeichnet durch**:

- einen ersten Austausch mindestens eines Banddatenwertes zwischen einer Steuerungsvorrichtung (C1) für die Temperatur-Zeit-Folge und einem zentralen Automatisierungssystem (A1) der Behandlungsanlage;
- einen zweiten Austausch mindestens eines Betriebsdatenwertes zwischen der Steuerungsvorrichtung (C1) für die Temperatur-Zeit-Folge und der Stumpfschweißmaschine (M1);
- eine Bestimmung eines thermischen Parameters der Schweißung zur Steuerung des metallurgischen Gefüges der Schweißung anhand der Band- und Betriebsdatenwerte;
- eine Steuerung der Schweißung, die mindestens von dem thermischen Parameter abhängig ist, und eine Steuerung des metallurgischen Gefüges der Schweißung **durch** Berechnung und Steuerung des thermischen Parameters.

2. Steuerungsverfahren nach Anspruch 1, **dadurch gekennzeichnet, dass** es eine automatische Klassifizierung jedes der Bänder in mindestens eine Werkstofffamilie umfasst, die mindestens einen Referenzwerkstoff umfasst, der durch mindestens einen Referenzdatenwert gekennzeichnet ist.

3. Steuerungsverfahren nach einem der Ansprüche 1 bis 2, **dadurch gekennzeichnet, dass** es einen automatischen Echtzeitvergleich des thermischen Parameters mit einem kritischen metallurgischen Parameter umfasst.

4. Steuerungsverfahren nach Anspruch 3, **dadurch gekennzeichnet, dass** die Steuerung der Schweißung von dem kritischen metallurgischen Parameter abhängig ist, der ausgehend von einem Sollwert festgelegt werden kann.

5. Steuerungsverfahren nach einem der Ansprüche 3 oder 4, **dadurch gekennzeichnet, dass** eine Überschreitung des Werts des kritischen metallurgischen Parameters durch den Wert des thermischen Parameters geeignet ist, eine Änderung des Werts mindestens eines Schweißparameters zu veranlassen.

6. Steuerungsverfahren nach Anspruch 5, **gekennzeichnet durch** eine Signalisierung der Überschreitung.

7. Verfahren zum Stumpfschweißen von Enden aufeinander folgender Bänder, das zum Stumpfschweißen des Endes eines ersten Bandes an ein anderes Ende eines zweiten Bandes mit einer Stumpfschweißmaschine (M1) einer Bandbehandlungsanlage geeignet ist, **dadurch gekennzeichnet, dass** es die automatische Steuerung der Temperatur-Zeit-Folge einer Schweißung nach Anspruch 1 umfasst.

8. Vorrichtung zur Steuerung (C1) einer Temperatur-Zeit-Folge einer Stumpfschweißung eines Endes eines ersten Bandes an ein anderes Ende eines zweiten Bandes, die für eine Stumpfschweißmaschine (M1) einer Behandlungsanlage geeignet ist, **dadurch gekennzeichnet, dass** sie umfasst:

- Anschlussmittel (C15), die dazu dienen, die Vorrichtung zur Steuerung (C1) an ein zentrales Automatisierungssystem (A1) der Bandbehandlungsanlage und an die Stumpfschweißmaschine (M1) anzuschließen, um einen Austausch mindestens eines Banddatenwertes bzw. einen Austausch mindestens eines Betriebsdatenwertes zu ermöglichen;
- einen Rechner (C11), der geeignet ist, ausgehend von den Band- und Betriebsdatenwerten mindestens einen thermischen Parameter der Schweißung zu berechnen zur Steuerung des metallurgischen Gefüges der Schweißung durch Berechnung und Steuerung des thermischen Parameters;
- Mittel zur Steuerung und Charakterisierung (C14) der Schweißung der Schweißnaht, die geeignet sind, die Schweißung in Abhängigkeit von dem thermischen Parameter zu steuern.

9. Vorrichtung zur Steuerung (C1) einer Temperatur-Zeit-Folge nach Anspruch 8, **dadurch gekennzeichnet, dass** sie eine Datenbank (C13) zur automatischen Klassifizierung jedes der Bänder in mindestens eine Werkstofffamilie umfasst, die mindestens einen Referenzwerkstoff umfasst, der durch mindestens einen Referenzdatenwert gekennzeichnet ist.

10. Vorrichtung zur Steuerung (C1) einer Temperatur-Zeit-Folge nach Anspruch 9, **dadurch gekennzeichnet, dass** der Rechner (C11) ein Klassifizierungsmodul (C112) umfasst, das geeignet ist, jedes Band in mindestens eine Werkstofffamilie der Datenbank (C13) zu klassifizieren und anhand mindestens eines Referenzdatenwerts mindestens eines Referenzwerkstoffs mindestens einen kritischen metallurgischen Parameter zu extrahieren oder zu berechnen.

11. Vorrichtung zur Steuerung (C1) einer Temperatur-Zeit-Folge nach Anspruch 10, **dadurch gekennzeichnet, dass** das Klassifizierungsmodul (C112) geeignet ist, den kritischen metallurgischen Parameter mit dem thermischen Parameter zu vergleichen.

12. Vorrichtung zur Steuerung (C1) einer Temperatur-Zeit-Folge nach einem der Ansprüche 10 oder 11, **dadurch gekennzeichnet, dass** der Rechner (C11) geeignet ist, im Fall einer Überschreitung des Werts des kritischen metallurgischen Parameters durch den Wert des thermischen Parameters automatisch einen neuen Wert mindestens eines Schweißparameters zu berechnen, der dazu dient, den Wert des thermischen Parameters unterhalb des Werts des kritischen metallurgischen Parameters zu halten.

13. Vorrichtung zur Steuerung (C1) einer Temperatur-Zeit-Folge nach Anspruch 12, **dadurch gekennzeichnet, dass** die Mittel zur Steuerung und Charakterisierung (C14) geeignet sind, den neuen Wert des Schweißparameters zu signalisieren.

14. Vorrichtung zur Steuerung (C1) einer Temperatur-Zeit-Folge nach Anspruch 12, **dadurch gekennzeichnet, dass** die Mittel zur Steuerung und Charakterisierung (C14) geeignet sind, die Schweißung anhand des neuen Werts des Schweißparameters zu lenken.

15. Stumpfschweißmaschine (M1) zum Stumpfschweißen von Enden aufeinander folgender Bänder einer Bandbehandlungsanlage, **dadurch gekennzeichnet, dass** sie die Vorrichtung zur Steuerung (C1) einer Temperatur-Zeit-Folge nach Anspruch 8 umfasst.

**Claims**

1. Method for the automatic control of a thermal cycle of a weld joining strips, intended to control the welding of one end of a first strip to another end of a second strip by a joining machine (M1) of a treatment plant, **characterised by**:

   - a first exchange of at least one strip data item between a control device (C1) of said thermal cycle and a central automation system (A1) of said treatment plant;
   - a second exchange of at least one operating data item between said control device (C1) of said thermal cycle and said joining machine (M1);
   - determination from said strip and operating data items of a thermal parameter of said weld for controlling the metallurgical structure of the weld;
   - a control of said welding dependent at least on said thermal parameter and a control of said metallurgical structure of said weld by computing and controlling said thermal parameter.

2. Control method according to claim 1, **characterised in that** it comprises automatic classification of each of said strips into at least one family of materials comprising at least one reference material **characterised by** at least one reference data item.

3. Control method according to one of claims 1 to 2, **characterised in that** it comprises an automatic comparison in real time of said thermal parameter with a critical metallurgical parameter.

4. Control method according to claim 3, **characterised in that** said control of said welding depends on said critical metallurgical parameter which is defined from a set-point value.

5. Control method according to one of claims 3 or 4, **characterised in that** the overshoot of the value of said critical metallurgical parameter by the value of said thermal parameter is capable of inducing a modification of the value of at least one welding parameter.

6. Control method according to claim 5, **characterised by** the reporting of said overshoot.

7. Method for joining ends of successive strips suited to joining the end of a first strip to another end of a second strip by a joining machine (M1) of a strip treatment plant, **characterised in that** it comprises the automatic control of the thermal cycle of a weld according to claim 1.

8. Control device (C1) of a thermal cycle of a weld joining one end of a first strip with another end of a second strip, suited to a joining machine (M1) of a strip treatment plant, **characterised in that** it comprises:

   - connection means (C15) intended to connect said control device (C1) respectively to a central automation system (A1) of said strip treatment plant and to said joining machine (M1), so as respectively to allow an exchange of at least one strip data item and an exchange of at least one operating data item;
   - a computer (C11) capable of computing, from said strip and operating data items, at least one thermal parameter of said weld for controlling the metallurgical structure of the weld by computing and controlling said thermal parameter;
   - control and characterisation means (C14) of the welding of said weld capable of controlling said welding as a function of said thermal parameter.

9. Device (C1) for controlling a thermal cycle according to claim 8, **characterised in that** it comprises a database (C13) intended to classify each of the strips into at least one family of materials comprising at least one reference material **characterised by** at least one reference data item.

10. Device (C1) for controlling a thermal cycle according to claim 9, **characterised in that** the computer (C11) comprises a classification module (C112) capable of classifying each strip into at least one family of materials of said database (C13) and of extracting or computing at least one critical metallurgical parameter from at least one reference data item of at least one reference material.

11. Device (C1) for controlling a thermal cycle according to claim 10, **characterised in that** the classification module (C112) is capable of comparing the critical metallurgical parameter with said thermal parameter.

12. Device (C1) for controlling a thermal cycle according to one of claims 10 or 11, **characterised in that** said computer (C11) is capable of automatically computing, in the event of the critical metallurgical parameter value being exceeded by the thermal parameter value, a new value for at least one welding parameter intended to maintain the thermal parameter value below the critical metallurgical parameter value.

13. Device (C1) for controlling a thermal cycle according to claim 12, **characterised in that** said control and characterisation means (C14) are capable of reporting said new value of said welding parameter.

14. Device (C1) for controlling a thermal cycle according to claim 12, **characterised in that** said control and characterisation means (C14) are capable of managing said welding from said new value of said welding parameter.

15. Joining machine (M1) intended to join the ends of successive strips from a strip treatment plant, **characterised in that** it comprises the control device (C1) of a thermal cycle according to claim 8.

FIG 1

FIG 2

Figure 3a

Figure 3b

Figure 3c

Figure 3d

FIG 3

FIG 4

**EP 2 560 785 B1**

## RÉFÉRENCES CITÉES DANS LA DESCRIPTION

**Documents brevets cités dans la description**

- JP 5115903 A